# DEMANDE DE BREVET EUROPEEN

(11) **EP 4 671 823 A1**
(43) Date de publication de la demande: **31.12.2025**
(21) Numéro de dépôt: 25185943.5
(22) Date de dépôt: 27.06.2025
(51) Int. Cl.: G01S 13/20, G01S 7/02, G01S 7/292, G01S 13/22, G01S 13/30, G01S 13/933

(54) **PROCÉDÉ DE FONCTIONNEMENT D'UN RADAR DE DÉTECTION ET RADAR DE DÉTECTION ASSOCIÉ**

(30) Priorité: 28.06.2024 FR 2407045
(71) Demandeur: THALES, 92190 Meudon (FR)
(72) Inventeur: GOY, Philippe, 33700 MERIGNAC (FR); COTTRON, Rodolphe, 33700 MERIGNAC (FR); VEYRAC, Yoan, 33700 MERIGNAC (FR); RAOULT, Mickaël, 33700 MERIGNAC (FR)
(74) Mandataire: Lavoix

(57) **Abrégé**

La présente invention concerne un procédé de fonctionnement d'un radar (10) de détection de cibles suivant un premier mode radar et un deuxième mode radar correspondant à des modes Doppler, le procédé comprenant la mise en œuvre de plusieurs récurrences d'une étape (110) d'émission/réception de signaux, chaque N-ième récurrence de ladite étape (110) comprenant les sous-étapes suivantes :
+ génération (111) de deux impulsions consécutives associées aux modes radar différents et à des directions d'émission différentes ;
+ émission (112) des impulsions dans des bandes fréquentielles différentes ;
+ réception (113) dans une fenêtre temporelle commune des échos des impulsions.

## Description

La présente invention concerne un procédé de fonctionnement d'un radar de détection. La présente invention concerne également un radar de détection mettant en œuvre un tel procédé.

Le domaine technique de l'invention est celui de la gestion du budget temps de détection et d'identification par des systèmes radar.

De manière traditionnelle, un système radar peut être employé de manière « mono-tâche », c'est-à-dire un seul mode Doppler de fonctionnement tout au long de la mission. Cela est par exemple le cas d'un mode de surveillance maritime (dite « MMTI », de l'anglais « Maritime Moving Target Indicator ») ou terrestre (dite « GMTI », de l'anglais « Ground Moving Target Indicator ») qui est adapté à une altitude et un type de cible donné.

Ainsi, le mode AIR permet de détecter des aéronefs alors que le mode de surveillance terrestre GMTI permet de détecter des engins se déplaçant sur une surface terrestre et le mode de surveillance maritime MMTI permet de détecter des engins se déplaçant sur une surface maritime.

Cette adaptation inclut par exemple l'emploi d'une logique de balayage de l'espace, de formes d'onde et de traitement fixés. Autrement dit, dans un tel cas, la trame ne varie pas dans le temps, tant que l'opérateur ne change pas de mission ou de mode. Le budget temps est alors associé uniquement à cette tâche et à des tâches techniques d'auto-calibration du radar.

Depuis de nombreuses années, les opérateurs radar cherchent à agrandir le spectre d'emploi des systèmes de détection radar et demandent à ce qu'ils deviennent « multitâches ». Par exemple, pour un même système radar, il est avantageux d'avoir simultanément une situation tactique maritime (MMTI), aérienne (dite « AIR ») et éventuellement avoir un retour des conditions météo. Le système radar doit alors définir le budget temps à allouer à chacune des tâches à mener.

Évidemment, plus une tâche a de temps alloué, plus elle sera efficace par exemple en termes de capacité de détection et/ou de discrimination. La gestion et l'optimisation du budget temps apparaissent donc cruciales pour les nouveaux systèmes radar.

Traditionnellement, le système radar emploie des stratégies d'entrelacement « temps court » (à l'échelle du bloc de traitement) ou « temps long » (à l'échelle d'un scan) pour mener à bien ses différentes tâches. Un budget temps est alloué à chacune de ces tâches à partir d'un compromis de performances de chacune des fonctions prises individuellement (temps de rafraîchissement, portée de détection, etc.)

L'entrelacement de blocs radar est alors une technique qui ordonnance temporellement des tâches qui ne sont pas simultanées.

Pour obtenir des tâches simultanées, une technique connue consiste à décomposer le système antennaire du radar en plusieurs sous-réseaux et d'allouer une tâche à chacun des sous-réseaux pour effectuer ce que l'on appelle une émission colorée. On retrouve ce fonctionnement principalement dans les systèmes radar de type MIMO (de l'anglais « Multiple Input Multiple Output »).

L'émission simultanée de plusieurs formes d'onde orthogonales est ainsi réalisée pour colorer l'espace, c'est-à-dire associer un couple {sous-réseau, forme d'onde} à une direction {azimut-élévation}. L'émission colorée permet soit d'obtenir une vision complète de l'environnement en réduisant ou en améliorant considérablement le temps de rafraichissement d'une tâche, soit d'effectuer plusieurs tâches simultanément.

Cette décomposition de l'espace antennaire en sous-réseaux et l'émission colorée ne sont pas nécessairement disponibles ou souhaitables pour toute architecture radar. En effet, un tel type d'émission peut dégrader les performances d'un système radar, en termes de portée notamment.

La présente invention a pour but de résoudre ce problème et de proposer donc une solution permettant de mettre en œuvre un système radar multitâches tout en utilisant un temps de rafraichissement équivalent à celui d'un système mono-tâche. Cela permet alors d'adapter le système radar à toute architecture tout en préservant les performances du système.

À cet effet, l'invention a pour objet un procédé de fonctionnement d'un radar de détection de cibles suivant un premier mode radar et un deuxième mode radar correspondant à des modes Doppler, le procédé comprenant la mise en œuvre de plusieurs récurrences d'une étape d'émission/réception de signaux, chaque N-ième récurrence de ladite étape comprenant les sous-étapes suivantes :
+ génération de deux impulsions consécutives associées aux modes radar différents et à des directions d'émission différentes ;
+ émission des impulsions dans des bandes fréquentielles différentes ;
+ réception dans une fenêtre temporelle commune des échos des impulsions.

Suivant d'autres aspects avantageux de l'invention, le radar comprend une ou plusieurs des caractéristiques suivantes, prises isolément ou suivant toutes les combinaisons techniquement possibles :
- le procédé comprenant en outre une étape préliminaire de sélection d'un nombre M correspondant à un rang d'ambiguïté à traiter dans un faisceau de signaux émis/reçus par le radar, le nombre M variant entre 0 et un nombre maximal de rangs d'ambiguïté dans le faisceau ;
   lors de la sous-étape de l'émission de chaque N-ième récurrence, au moins l'une des impulsions, dite impulsion déphasée, étant émise avec une phase aléatoire associée au nombre N ;
   lors de la sous-étape de la réception de chaque N-ième récurrence, le déphasage des échos reçus étant compensé la bande fréquentielle de l'impulsion déphasée, par la phase aléatoire associée au nombre N-M.
- chaque impulsion est émise avec une phase aléatoire associée à la bande fréquentielle correspondante.
- la sous-étape de la réception comprend la compensation du déphasage des échos reçus dans chaque bande fréquentielle, par la phase aléatoire associée au nombre N-M et à cette bande fréquentielle.
- les impulsions sont émises avec un écart fréquentiel supérieur à la largeur de chacune desdites bandes fréquentielles ;
de préférence, l'écart fréquentiel étant choisi pour pouvoir distinguer les bandes fréquentielles différentes à la réception des échos.
- les directions d'émission et de réception différentes correspondent à des sites différents définis par rapport à une direction de pointage.
- le premier mode radar correspond au mode AIR et le deuxième mode radar correspond au mode choisi dans le groupe comprenant :
   - GMTI ;
   - MMTI ;
   - AIR avec une direction de pointage différentes du premier mode.
- le premier mode radar et le deuxième mode radar correspondent à des modes Doppler différents.
- une même fréquence de répétition Fr est choisie pour les deux modes radar, la durée de chaque récurrence étant alors égale à 1/Fr.
- une même bande fréquentielle est choisie dans chaque récurrence pour les impulsions associées à un même mode radar.
- le procédé comprenant en outre une étape de traitement cohérent des échos dans chaque bande fréquentielle.
- une fréquence de répétition Fr1 est choisie pour le premier mode radar et une fréquence de répétition Fr2 est choisie pour le deuxième mode radar, telle que Fr1=kFr2, où k est un nombre entier, la durée de chaque récurrence est égale à 1/Fr1.
- une même bande fréquentielle est choisie dans chaque récurrence pour les impulsions associées au premier mode radar ; et
- une même bande fréquentielle est choisie dans chaque k-ième récurrence pour les impulsions associées au deuxième mode radar.
- le procédé comprenant en outre :
   - une étape de traitement cohérent des échos correspondant aux impulsions associées au premier mode radar et au deuxième mode radar ; et
   - une étape de traitement non-cohérent appliqué aux sorties du traitement cohérent des échos correspondant aux impulsions associé au deuxième mode radar.
- lors de la sous-étape de l'émission, les impulsions associées aux modes radar différents sont émises en utilisant des pentes différentes de chirps utilisés pour les émettre.
- lors de la sous-étape de réception, des échos associés aux modes radar différents sont distingués en déterminant les pentes des chirps correspondants.
- lors de la sous-étape de l'émission, les impulsions associées aux modes radar différents sont émises en utilisant des polarisations différentes.
- lors de la sous-étape de réception, des échos associés aux modes radar différents sont distingués en déterminant leurs polarisations.

L'invention a également pour objet un radar de détection de cibles comprenant des moyens techniques configurés pour mettre en œuvre le procédé tel que défini ci-dessus.

L'invention apparaîtra plus clairement à la lecture de la description qui va suivre, donnée uniquement à titre d'exemple non limitatif, et faite en référence aux dessins dans lesquels :
- [Fig. 1] la figure 1 est une vue schématique d'un radar de détection selon l'invention ;
- [Fig. 2] [Fig. 3] les figures 2 et 3 sont des vues schématiques illustrant différentes applications du radar de la figure 1 ;
- [Fig. 4] la figure 4 est un organigramme d'un procédé de fonctionnement du radar de la figure 1 ;
- [Fig. 5] [Fig. 6] [Fig. 7] [Fig. 8] les figures 5 à 8 sont différentes vues illustrant la mise en œuvre du procédé de la figure 4.

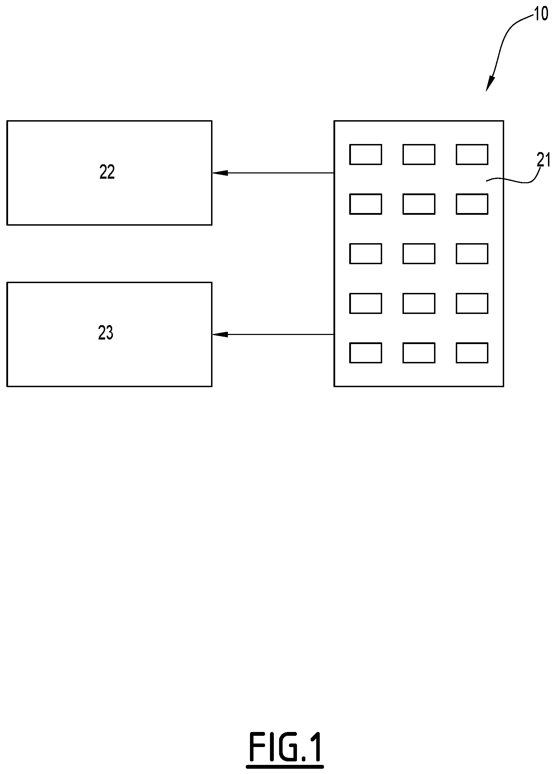

La figure 1 illustre un radar de détection 10 selon l'invention. Ce radar 10 est destiné par exemple à être embarqué sur un porteur mobile se déplaçant dans l'air et/ou sur une surface terrestre et/ou sur une surface maritime. Avantageusement, le radar 10 est destiné à être embarqué sur un porteur se déplaçant dans l'air, tel qu'un aéronef. Alternativement, le radar 10 est disposé de manière fixe.

Le radar 10 permet de détecter des cibles suivant au moins deux modes radar. Chaque mode radar correspond à un mode Doppler particulier définissant une forme d'ondes émises vers une cible.

Par définition, le mode Doppler d'un radar correspond à un mode de fonctionnement de celui-ci dans lequel un traitement de type Doppler est applicable.

Autrement dit, chaque mode radar permet de détecter des cibles d'un type particulier se trouvant ou se déplaçant dans un milieu particulier par rapport au radar. Par exemple, lorsque le radar 10 est embarqué sur un porteur se déplaçant dans l'air, chaque mode radar permet de détecter des cibles se déplaçant avec une vitesse relative particulière dans l'air ou sur une surface terrestre ou maritime.

Avantageusement, le radar 10 permet de détecter des cibles suivant au moins deux modes radar différents.

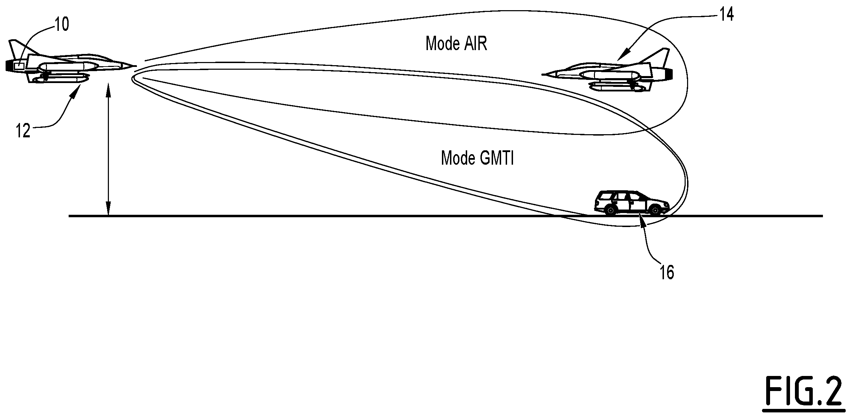

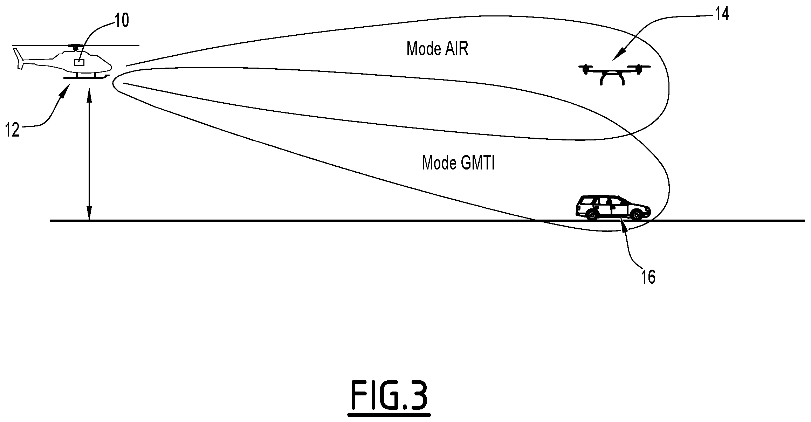

Les figures 2 et 3 illustrent la mise en œuvre d'un premier mode radar dit « AIR » et d'un deuxième mode radar dit « GMTI » lorsque le radar 10 est embarqué dans un aéronef 12.

Le mode AIR permet ainsi de détecter d'autres aéronefs 14 se déplaçant à proximité de l'aéronef 12. La direction de pointage appliquée par le radar 10 dans un tel cas est à site sensiblement nul.

Dans l'exemple de la figure 2, les deux aéronefs 12, 14 présentent des avions, par exemple des avions de combat, se déplaçant avec une vitesse relative pouvant varier (par exemple de 0 à quelques nombres de Mach). Dans l'exemple de la figure 3, chaque aéronef 12, 14 présente un hélicoptère ou un drone de sorte que leur vitesse relative de déplacement est modérée ou faible (par exemple inférieure à 200 km/h).

Le mode GMTI permet de détecter des engins 16 (tels que véhicules) se déplaçant sur la surface terrestre. Alternativement, le deuxième mode radar peut correspondre au mode MMTI pour détecter des engins (tels que bateaux) se déplaçant sur une surface maritime. La direction de pointage appliquée par le radar 10 dans un tel cas est à site négatif.

Alternativement, les deux modes mis en œuvre par le radar 10 sont identiques mais correspondent à des directions de pointage différentes. Par exemple, le premier mode peut correspondre au mode « AIR » à des sites positifs et le deuxième mode peut correspondre au mode « AIR » à des sites négatifs. Un exemple similaire avec des directions de pointage différentes peut également être appliqué à chacun des modes GMTI et MMTI.

En référence à la figure 1, le radar 10 comprend un réseau d'antennes élémentaires 21 permettant d'émettre des signaux sous la forme d'impulsions et de recevoir des signaux correspondant à des échos de ces impulsions.

Le radar 10 comprend en outre une unité d'émission 22 permettant de générer les impulsions à émettre par le réseau d'antennes 21 et une unité de réception 23 permettant de traiter les échos reçus par le réseau d'antennes 21 afin d'en déduire la présence d'une cible et éventuellement, une vitesse et une distance jusqu'à cette cible.

Chacune des unités 22, 23 est réalisée par exemple sous la forme d'un circuit programmable de type FPGA (de l'anglais « Field Programmable Gate Array ») et/ou de type ASIC (de l'anglais « Application-Specific Integrated Circuit »). En complément ou en variante, chacune de ces unités 22, 23 est réalisée au moins partiellement sous la forme d'un logiciel exécutable par un processeur et stocké dans une mémoire.

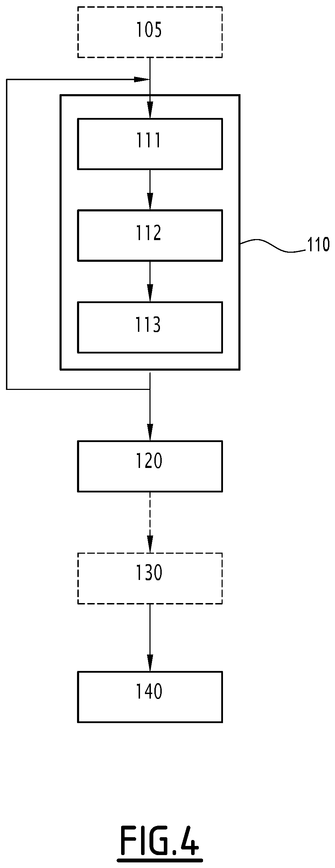

Le procédé de fonctionnement du radar 10 sera désormais expliqué en référence à la figure 4 présentant un organigramme de ses étapes.

Il est considéré que ce procédé est mis en œuvre pour effectuer un scan ou une image des environs du porteur embarquant le radar 10, selon par exemple une direction de déplacement du porteur.

Ce procédé comprend notamment la mise en œuvre de plusieurs récurrences d'une étape 110 d'émission/réception de signaux.

La fréquence de répétition de ces récurrences est choisie en fonction de fréquences de répétition associées aux modes radar. La fréquence de répétition de chaque mode radar est choisie en fonction de l'application choisie pour le radar 10.

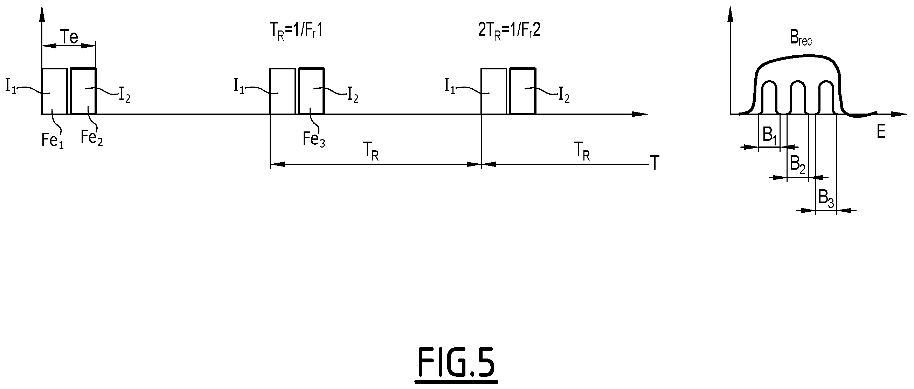

Ainsi, lorsque le radar 10 est utilisé selon l'application expliquée en référence à la figure 2 (i.e. les vitesses en mode « AIR » variant considérablement), dite première application, une fréquence de répétition Fr1 est choisie pour le premier mode radar et une fréquence de répétition Fr2 différente est choisie pour le deuxième mode radar. Dans un tel cas, il est considéré que Fr1=kFr2, où k est un nombre entier et que donc la première fréquence Fr1 est supérieure à la deuxième fréquence Fr2. En outre, dans cette application, la fréquence de répétition de chaque récurrence est choisie en fonction de la plus grande fréquence, c'est-à-dire en fonction de Fr1. La durée T_{R} de chaque récurrence est alors égale à 1/Fr1, comme cela est illustré sur la figure 5.

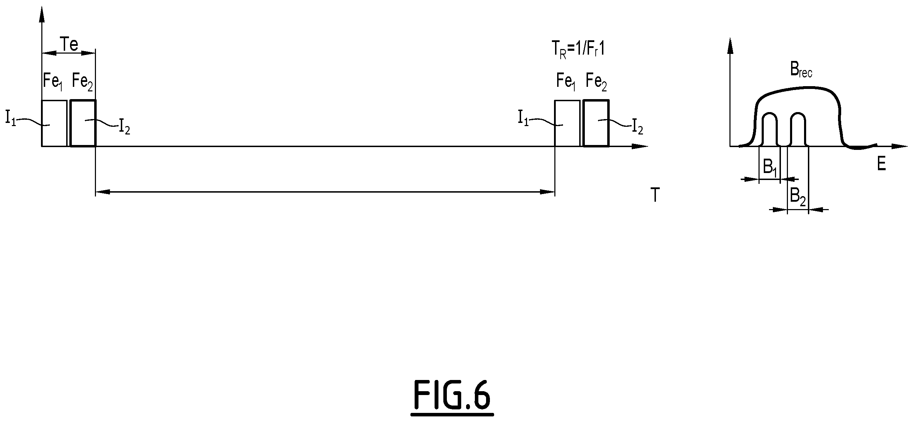

Lorsque le radar 10 est utilisé selon l'application expliquée en référence à la figure 3 (i.e. les variations des vitesses en mode « AIR » sont faibles ou modérées), dite deuxième application, une même fréquence de répétition Fr est choisie pour les deux modes radar. Dans un tel cas, cette même fréquence de répétition Fr est choisie pour chaque récurrence de sorte que la durée T_{R} de chaque récurrence est égale à 1/Fr, comme cela est illustré sur la figure 6.

Chaque N-ième récurrence de l'étape 110 comprend la mise œuvre de sous-étapes 111 à 113 expliquées en détail ci-dessous.

Lors de la sous-étape 111, l'unité d'émission 22 génère deux impulsions consécutives associées aux modes radar différents et à des directions d'émission différentes.

En particulier, lors de cette sous-étape, l'unité d'émission 22 génère une première impulsion I₁ associée au premier mode radar et une deuxième impulsion I₂ associée au deuxième mode radar.

Chaque impulsion est associée à une direction d'émission définie par exemple par un couple de valeurs angulaires. Ces valeurs angulaires correspondent par exemple à l'élévation (ou site) et à l'azimut d'émission, dénotées par la suite respectivement par EIᵢ et Azᵢ. Dans tout ce qui suit, l'indice i=1 désigne le premier mode radar et i=2 désigne le deuxième mode radar.

Les impulsions sont générées dans une fenêtre d'émission Te dans laquelle chaque impulsion a une largeur Li et espacée de l'autre impulsion et de l'une des frontières de la fenêtre d'émission Te par un écart temporel T_{GAP}.

Dans le domaine fréquentiel, les impulsions partagent un même support fréquentiel B_{rec}, avec un écart fréquentiel F_{GAP} entre les porteuses Fi correspondantes supérieur aux bandes fréquentielles Bi de ces impulsions. L'écart fréquentiel F_{GAP} est choisi suffisant pour distinguer les échos de ces impulsions à la réception. Dans tout ce qui suit, une bande fréquentielle est définie par une fréquence centrale et une largeur de bande. Avantageusement, dans la suite, toutes les bandes fréquentielles présentent une même largeur. En outre, l'écart fréquentiel F_{GAP} est mesuré entre un couple de fréquences centrales correspondantes et est supérieur à la largeur de chaque bande fréquentielle.

La bande fréquentielle B₁ de la première impulsion I₁, c'est-à-dire de l'impulsion associée au premier mode radar (mode AIR), est choisie la même pour chaque récurrence. Avantageusement, ce choix est indépendant de l'application du radar 10. Cela est illustré schématiquement sur les figures 5 et 6 illustrant plusieurs récurrences consécutives respectivement de la première application et de la deuxième application du radar 10. Ainsi, la même fréquence centrale Fe, est choisie pour la première impulsion dans chaque récurrence dans chaque application.

La bande fréquentielle de la deuxième impulsion I₂, c'est-à-dire de l'impulsion associée au deuxième mode radar (mode GMTI ou MMTI par exemple), est choisie en fonction de l'application du radar 10.

En particulier, pour la première application, une même bande fréquentielle et plus particulièrement une même fréquence centrale pour la deuxième impulsion I₂ est choisie dans chaque k-ième récurrence. Cette technique peut être vue comme un mécanisme de barillet, où à chaque instant T_{R}, on choisit une fréquence centrale dans le barillet modulo k. Autrement dit, dans un tel cas, k fréquences centrales différentes sont choisies de manière alternée pour les deuxièmes impulsions I₂ dans k récurrences consécutives. Dans l'exemple de la figure 5, lorsque k=2, deux bandes fréquentielles B₂ et B₃ (c'est-à-dire deux fréquences centrales) sont alors choisies de manière alternée pour chaque deuxième impulsion I₂.

Pour la deuxième application, une même bande fréquentielle B₂ pour la deuxième impulsion I₂ est choisie dans chaque récurrence, comme cela est illustré sur la figure 6.

Lors de la sous-étape 112, l'unité d'émission 22 émet les impulsions générées lors de la sous-étape précédente dans les bandes fréquentielles correspondantes.

Lors de la sous-étape 113, l'unité de réception 23 reçoit des échos correspondant aux impulsions émises dans une fenêtre temporelle commune de réception. La durée de cette fenêtre commune de réception est égale à la durée totale de la récurrence T_{R} moins la durée de la fenêtre d'émission Te. Lors de la réception, les échos correspondant aux impulsions différentes sont distingués par ses bandes fréquentielles différentes, en utilisant par exemple des filtres passe-bande. Un filtrage spatial de type FFC peut également être appliqué dans la direction associée à ladite bande.

Lors d'une étape suivante 120, mise en œuvre après les N récurrences de l'étape 110, l'unité de réception 23 met en œuvre un traitement cohérent des échos correspondant aux impulsions associées au premier mode radar et aux impulsions associées au deuxième mode radar. Un tel traitement cohérent consiste à appliquer le filtrage adapté à la forme d'onde du mode de détection, par exemple une compression d'impulsion sur l'axe temps court (au sein d'une récurrence) et un traitement Doppler sur l'axe temps long (de récurrence en récurrence).

Lors d'une étape suivante 130, mise en œuvre uniquement pour lorsque le radar 10 fonctionne selon sa première application, l'unité de réception 23 met en œuvre en outre un traitement non-cohérent aux sorties du traitement cohérent des impulsions associées au deuxième mode radar.

Un tel traitement non-cohérent effectue la moyenne en puissance des signaux reçus sur chaque bande de fréquence d'une même direction (après le traitement cohérent).

Dans certains modes de réalisation, cette étape est mise en œuvre systématiquement (i.e. indépendamment de l'application du radar) dans la mesure où k = 1 la moyenne est directement le signal.

Lors d'une étape suivante 140, l'unité de réception 23 transmet l'ensemble des sorties du traitement cohérent et éventuellement du traitement non-cohérent, à tout système intéressé permettant par exemple de mettre en œuvre une levée d'ambiguïté en distance et/ou en vitesse.

Ces sorties peuvent alors être utilisées pour détecter une ou plusieurs cibles selon les modes radar différents, éventuellement avec des vitesses et des distances associées à ces cibles.

Dans certains modes de réalisation, le procédé de fonctionnement tel qu'expliqué précédemment comprend en outre la mise en œuvre d'au moins une technique permettant de séparer les différents modes radar et/ou de rejeter de la considération de certains échos que ne sont pas nécessaires ou sont ambigus en distance pour reconstituer une image complète des environs selon au moins l'un des modes radar.

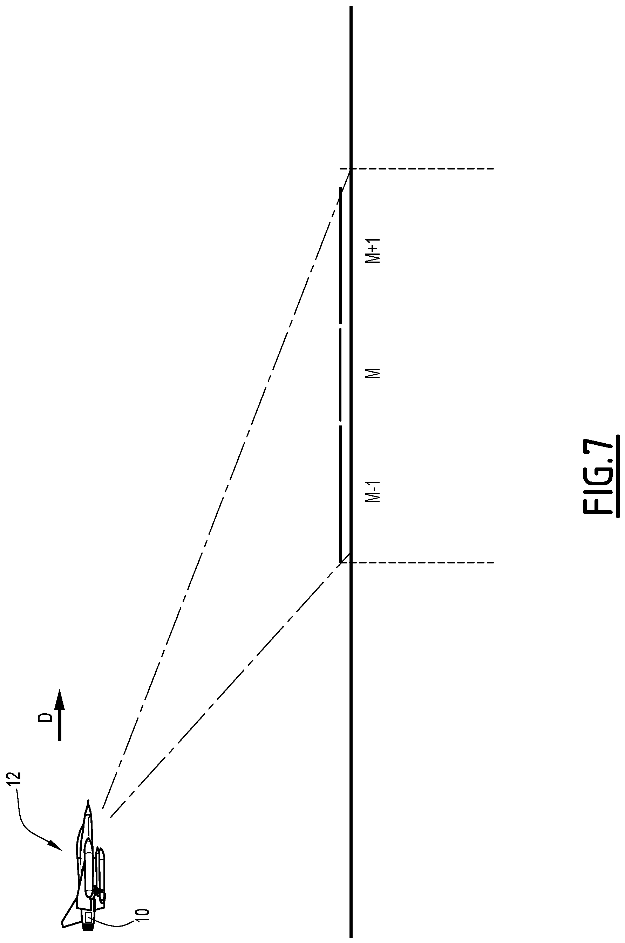

La figure 7 illustre un exemple d'un tel cas selon le mode radar GMTI. Selon cet exemple, le faisceau radar émis par le radar 10 à partir du porteur 12 couvre sur la surface terrestre plusieurs portions dont les échos se superposent au fur et à mesure du déplacement du porteur selon la direction D. Pour éviter de traiter l'ensemble des échos provenant de l'empreinte du faisceau au sol, une première technique consistant à choisir et à traiter seulement un seul rang d'ambiguïté au sein du faisceau est mise en œuvre.

Selon cette première technique, le procédé de fonctionnement du radar 10 comprend en outre une étape préliminaire 105 consistant à sélectionner un nombre M correspondant à un rang d'ambiguïté à traiter dans le faisceau de signaux émis/reçus par le radar. Ce nombre M varie alors entre 0 et un nombre maximal de rangs d'ambiguïté dans le faisceau. Le nombre maximal dépend notamment de l'ouverture du faisceau radar. Comme cela est illustré sur la figure 7, le rang d'ambiguïté M peut correspondre à la partie centrale du faisceau radar.

Dans certains modes de réalisation, lors de cette étape, plusieurs nombres M correspondant à plusieurs rangs d'ambiguïté à traiter sont choisis. Dans ce cas, il est considéré par la suite que la technique décrite ci-dessous est appliquée en relation avec chaque nombre M choisi. Les traitements s'effectuent par exemple en parallèle.

Lors de la mise en œuvre de la N-ième récurrence de l'étape 110 et notamment lors de la sous-étape de l'émission 112, l'unité d'émission 22 choisit l'une des impulsions, par exemple la première impulsion et ajoute une phase aléatoire *ϕ_{iN}* à cette impulsion. Avantageusement, l'unité d'émission 22 ajoute une phase aléatoire différente *ϕ_{iN}* à chacune des impulsions. La ou chaque impulsion ayant une phase aléatoire *ϕ_{iN}* ajoutée est dite par la suite impulsion déphasée.

Il est à noter que le choix de l'impulsion à déphaser reste le même pour chaque récurrence de cette sous-étape 112. Autrement dit, lorsqu'une seule impulsion est déphasée lors de cette sous-étape, la même impulsion est déphasée dans chaque récurrence de cette étape. Lorsque les deux impulsions sont déphasées lors de cette sous-étape, ces impulsions sont également déphasées dans chaque récurrence de cette sous-étape.

Il est également à noter que la valeur de la phase aléatoire *ϕ_{iN}* pour la ou chaque impulsion est ensuite mémorisée pour au moins M récurrences suivantes de l'étape 110.

Il est à noter en outre que lorsque cette première technique est mise en œuvre, les échos reçus lors de P premières récurrences, appelées « temps mort », sont par exemple rejetés. Ce nombre P est lié à la distance maximale instrumentée, au retard maximal issu de l'écho le plus lointain que peut atteindre la forme d'onde. Le nombre P est donc lié au rang d'ambiguïté maximal du mode radar, c'est un donc un majorant de M : M ≤ P.

Puis, lors de la sous-étape de réception 113, l'unité de réception 23 compense le déphasage des échos reçus dans la bande fréquentielle de la ou de chaque impulsion déphasée, par la phase aléatoire associée au nombre N-M. Autrement dit, le déphasage s'effectue en faisant une soustraction de la valeur *ϕi_{N - M}* dans la bande correspondant à l'indice i.

Ainsi, lors du traitement qui suit, seulement les échos correspondant au rang d'ambiguïté M peuvent être traités de manière cohérente. Le déphasage des autres échos ne peut pas se faire correctement de sorte qu'ils sont considérés comme des bruits blancs.

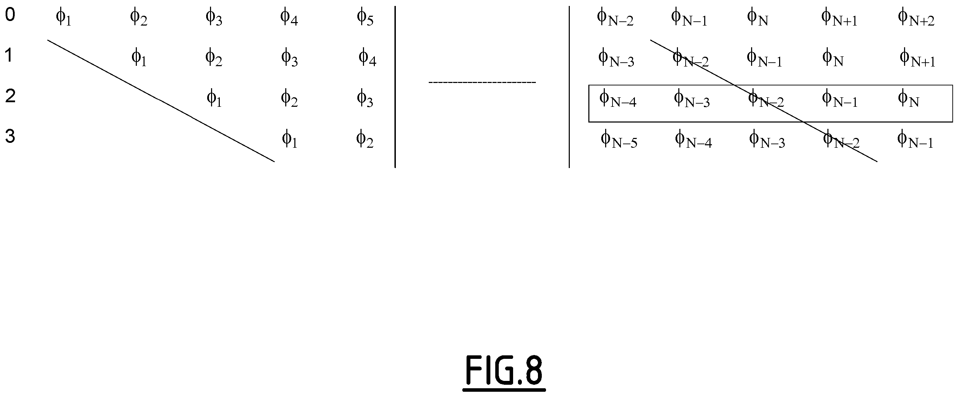

Ce principe est illustré schématiquement sur la figure 8. Selon l'exemple de cette figure, le nombre M est égal à 2 et le nombre maximal de rangs d'ambiguïté est égal à 3. Ainsi, lors de la N-ième récurrence de l'étape 110, pour choisir uniquement les signaux correspondant au rang d'ambiguïté M=2, la valeur *ϕ*_{*iN* - 2} est utilisée pour compenser le déphasage dans la bande fréquentielle correspondante.

D'autres techniques pour lever les ambiguïtés en distance et vitesse et/ou selon au moins une direction de pointage sont également possibles, par exemple en employant plusieurs fréquences de répétition associées à un traitement d'extraction.

Par ailleurs, il est également possible d'obtenir une meilleure isolation des échos correspondant aux modes radar différents lors de leur réception.

Ainsi, selon une deuxième technique, lors de la mise en œuvre de la N-ième récurrence de l'étape 110 et notamment lors de la sous-étape de l'émission 112, l'unité d'émission 22 met en œuvre des pentes différentes des chirps utilisés pour émettre les impulsions associées aux modes radar différents. Autrement dit, lors de cette sous-étape 112, l'unité d'émission 22 émet les impulsions en utilisant soit une pente ascendante soit une pente descendante en fonction du mode radar associé à chaque impulsion. La même pente est alors utilisée pour toutes les impulsions de ce type dans toutes les récurrences de l'étape 110.

Par exemple, pour toutes les récurrences, une pente ascendante est choisie pour les impulsions associées au premier mode et une pente descendante est choisie pour les impulsions associées au deuxième mode.

Puis, lors de la sous-étape de réception 113, l'unité de réception 23 reçoit des échos ayant des pentes fréquentielles différentes. Cette unité de réception 23 détermine donc les pentes reçues (en utilisant notamment des filtres adaptés) afin d'isoler les échos correspondant aux modes radar différents.

Selon une troisième technique permettant d'obtenir également une meilleure isolation des échos correspondant aux modes radar différents lors de leur réception, lors de la mise en œuvre de la N-ième récurrence de l'étape 110 et notamment lors de la sous-étape de l'émission 112, l'unité d'émission 22 met en œuvre des polarisations différentes des ondes utilisées pour émettre les impulsions associées aux modes radars différents. Autrement dit, lors de cette sous-étape 112, l'unité d'émission 22 émet l'onde portant chaque impulsion avec une polarisation choisie en fonction du mode radar associé à cette impulsion. Cette même polarisation est choisie pour ce type d'impulsion pour toutes les récurrences de l'étape 110.

Par exemple, deux polarisations, à savoir une polarisation verticale et une polarisation horizontale peuvent être choisies pour les impulsions émises lors de la sous-étape 112. Selon d'autres exemples, une polarisation à 45° ou en circulaire peut être utilisée. Par exemple, une polarisation circulaire gauche peut être associée au mode AIR et une polarisation circulaire droite peut être associée au mode GMTI ou MMTI.

Puis, lors de la sous-étape de réception 113, l'unité de réception 23 reçoit des échos ayant des polarisations différentes. Cette unité de réception 23 détermine donc les polarisations des échos reçus (en utilisant notamment des filtres adaptés) afin d'isoler les échos correspondant aux modes radar différents.

Dans certains modes de réalisation, les techniques précitées sont combinées entre elles pour être mises en œuvre simultanément. En outre, une technique pour lever les ambiguïtés en distance et vitesse et/ou selon au moins une direction de pointage, peut être également utilisée en combinaison avec la deuxième technique ou la troisième technique, telle que décrite ci-dessus.

On conçoit alors que la présente invention présente un certain nombre d'avantages.

Tout d'abord, l'invention permet de traiter les deux modes radar de manière simultanée ce qui permet de fonctionner avec un temps de rafraichissement commun et cela dans chaque application radar. Cela présente un avantage certain pour des traitements de type pistage de cibles.

En outre, une architecture radar moderne permet de mettre en œuvre une configuration particulière (fréquence, direction) de chaque impulsion dans la fenêtre d'émission Te.

Le traitement simultané des deux modes présente également un avantage en termes de détection et de gestion de fausses alarmes. Par exemple, de manière usuelle, un mode AIR présente sur ses cartes de détection des échos présents dans ses lobes secondaires en site. Un traitement de type SLS (de l'anglais « Side Lobe Suppression ») peut alors être employé pour filtrer ces échos pour éviter les détections de cibles mobiles présentes sur la terre. Au contraire, dans le cadre de modes simultanés AIR et GMTI (ou MMTI), ces informations peuvent être utiles pour corréler les éventuelles cibles détectées dans les lobes secondaires présents d'un mode pour les envoyer vers l'autre.

En outre, la technique du choix du ou des rangs d'ambiguïté souhaités permet de ne retenir que les signaux correspondant à ce ou à ces rangs et d'éviter donc des traitements non-nécessaires. Cette technique permet en plus de rajouter une forte isolation supplémentaire entre les signaux du mode AIR et les signaux du mode GMTI (ou MMTI).

D'autres techniques permettant de lever les ambiguïtés en distance et vitesse et/ou selon des directions particulières peuvent être également utilisées, par exemple en employant plusieurs fréquences de répétition associées à un traitement d'extraction.

## Revendications

1. Procédé de fonctionnement d'un radar (10) de détection de cibles suivant un premier mode radar et un deuxième mode radar correspondant à des modes Doppler, le procédé comprenant la mise en œuvre de plusieurs récurrences d'une étape (110) d'émission/réception de signaux, chaque N-ième récurrence de ladite étape (110) comprenant les sous-étapes suivantes :
+ génération (111) de deux impulsions consécutives associées aux modes radar différents et à des directions d'émission différentes ;
+ émission (112) des impulsions dans des bandes fréquentielles différentes ;
+ réception (113) dans une fenêtre temporelle commune des échos des impulsions.

2. Procédé selon la revendication 1, comprenant en outre une étape préliminaire (105) de sélection d'un nombre M correspondant à un rang d'ambiguïté à traiter dans un faisceau de signaux émis/reçus par le radar (10), le nombre M variant entre 0 et un nombre maximal de rangs d'ambiguïté dans le faisceau ;
lors de la sous-étape de l'émission (112) de chaque N-ième récurrence, au moins l'une des impulsions, dite impulsion déphasée, étant émise avec une phase aléatoire associée au nombre N ;
lors de la sous-étape de la réception (113) de chaque N-ième récurrence, le déphasage des échos reçus étant compensé la bande fréquentielle de l'impulsion déphasée, par la phase aléatoire associée au nombre N-M.

3. Procédé selon la revendication 2, dans lequel chaque impulsion est émise avec une phase aléatoire associée à la bande fréquentielle correspondante.

4. Procédé selon la revendication 3, dans lequel la sous-étape de la réception (113) comprend la compensation du déphasage des échos reçus dans chaque bande fréquentielle, par la phase aléatoire associée au nombre N-M et à cette bande fréquentielle.

5. Procédé selon l'une quelconque des revendications précédentes, dans lequel les impulsions sont émises avec un écart fréquentiel supérieur à la largeur de chacune desdites bandes fréquentielles ;
de préférence, l'écart fréquentiel étant choisi pour pouvoir distinguer les bandes fréquentielles différentes à la réception des échos.

6. Procédé selon l'une quelconque des revendications précédentes, dans lequel les directions d'émission et de réception différentes correspondent à des sites différents définis par rapport à une direction de pointage.

7. Procédé selon l'une quelconque des revendications précédentes, dans lequel le premier mode radar correspond au mode AIR et le deuxième mode radar correspond au mode choisi dans le groupe comprenant:
- GMTI ;
- MMTI ;
- AIR avec une direction de pointage différentes du premier mode.

8. Procédé selon l'une quelconque des revendications précédentes, dans lequel le premier mode radar et le deuxième mode radar correspondent à des modes Doppler différents.

9. Procédé selon l'une quelconque des revendications précédentes, dans lequel une même fréquence de répétition Fr est choisie pour les deux modes radar, la durée de chaque récurrence étant alors égale à 1/Fr.

10. Procédé selon la revendication 9, dans lequel une même bande fréquentielle est choisie dans chaque récurrence pour les impulsions associées à un même mode radar.

11. Procédé selon la revendication 9 ou 10, comprenant en outre une étape (120) de traitement cohérent des échos dans chaque bande fréquentielle.

12. Procédé selon l'une quelconque des revendications 1 à 8, dans lequel une fréquence de répétition Fr1 est choisie pour le premier mode radar et une fréquence de répétition Fr2 est choisie pour le deuxième mode radar, telle que Fr1=kFr2, où k est un nombre entier, la durée de chaque récurrence est égale à 1/Fr1.

13. Procédé selon la revendication 12, dans lequel :
- une même bande fréquentielle est choisie dans chaque récurrence pour les impulsions associées au premier mode radar ; et
- une même bande fréquentielle est choisie dans chaque k-ième récurrence pour les impulsions associées au deuxième mode radar.

14. Procédé selon la revendication 12 ou 13, comprenant en outre :
- une étape (120) de traitement cohérent des échos correspondant aux impulsions associées au premier mode radar et au deuxième mode radar ; et
- une étape (130) de traitement non-cohérent appliqué aux sorties du traitement cohérent des échos correspondant aux impulsions associé au deuxième mode radar.

15. Radar (10) de détection de cibles comprenant des moyens techniques (21, 22, 23) configurés pour mettre en œuvre le procédé selon l'une quelconque des revendications précédentes.
